# EUROPÄISCHE PATENTSCHRIFT

(11) **EP 1 667 302 B1**
(45) Veröffentlichungstag und Bekanntmachung des Hinweises auf die Patenterteilung: **14.11.2012**
(21) Anmeldenummer: 05026287.2
(22) Anmeldetag: 02.12.2005
(51) Int. Cl.: H02H 3/04

(54) **Verfahren und Vorrichtung zur Erfassung eines fehlerhaften Stromes oder einer fehlerhaften Spannung und Abschaltung der Versorgungsspannung**
Method and apparatus for detecting an inadmissible current or voltage and tripping of the supply voltage
Procédé et dispositif pour la détection d'un courant ou d'une tension inadmissible et déclenchement de l'alimentation

(30) Priorität: 04.12.2004 DE 102004058540
(43) Veröffentlichungstag der Anmeldung: 07.06.2006
(73) Patentinhaber: Bosch Rexroth AG, 70184 Stuttgart (DE)
(72) Erfinder: Nikolai, Horst, 64720 Michelstadt (DE)

(56) Entgegenhaltungen:
- DE-A1- 2 325 265
- DE-A1- 2 504 648
- US-A- 4 001 654
- US-A- 5 742 513
- US-A- 5 956 218

## Beschreibung

Die Erfindung entspringt dem Gebiet der elektrischen Schaltungstechnik und beschreibt ein Verfahren zur Überwachung der Versorgungsspannung eines Verbrauchers sowie eine Vorrichtung zur Durchführung des Verfahrens.

Schaltungsanordnungen zur Abschaltung bei Überstrom oder Überspannung zum Schutz eines angeschlossenen Verbrauchers sind prinzipiell bekannt. Eine solche Anordnung zeigt beispielsweise die deutsche Patentschrift DE 2504648 C2. Würden derartige Schaltungen zur Überwachung von Verbrauchern in der Sicherheitstechnik, beispielsweise für Sicherheitssteuerungen, verwendet, so würden diese den dort gestellten sehr hohen Anforderungen an die Betriebsbereitschaft und Funktionssicherheit nicht genügen. Derartige Geräte müssen die einschlägigen Normen erfüllen und werden von Zertifizierungsstellen, wie z.B. dem TÜV, zertifiziert.

Um die Normen zu erfüllen, ist unter anderem eine Sicherstellung der Betriebsbereitschaft der Überspannungsüberwachung bzw. Überspannungsabschaltung erforderlich. Um dies zu gewährleisten sind Lösungen bekannt, die beim Versagen der Überspannungsabschaltung durch weitere Massnahmen einen sicheren Zustand erreichen. Diese haben allerdings den Nachteil, dass es zwischen den ohnehin erforderlichen beiden Kanälen eine Spannungsentkopplung geben muss. Des weiteren bleibt im beschriebenen Fehlerfall ein Kanal im Zustand Überspannung, welches zur Zerstörung oder Beschädigung des Verbrauchers führen kann.

Die Druckschrift US 5 956 218 A betrifft einen Fehlerstromschutzschalter mit automatischer Überwachungseinrichtung und jeweils einem Summenstromwandler, einem Magnetauslöser und einem Schaltwerk mit zwei Hauptstromkontakten, wobei ein erster Hauptstromkontakt für eine erste Netzleitung und ein zweiter Hauptstromkontakt für eine zweite Netzleitung vorgesehen ist. Dabei werden diese beiden Hauptstromkontakte durch einen Stößel des Magnetauslösers immer gemeinsam betätigt, so dass entweder immer beide Hauptstromkontakte gleichzeitig geöffnet oder geschlossen sind. Somit ist eine Überwachung beider Netzleitungen durch das Schaltwerk durch gleichzeitiges Schließen oder Öffnen beider Netzleitungen durch jeweils einen Hauptstromkontakt möglich. Dem Schaltwerk ist ein Bypass parallel geschaltet - Schalt werk und Bypass sind abwechselnd austenerbar und werden überwacht. Der Bypass ist nicht durch Überstrom bzw.-spannung aktivierbar.

Die Druckschrift US 5 742 513 A betrifft ein Verfahren und ein System zum automatischen Testen eines Relays. Falls hierbei ein Fehler entdeckt wird, übermittelt ein Schutzrelay über eine Zuleitung ein entsprechendes Signal an Stromkreisunterbrecher. Dabei dienen diese Stromkreisunterbrecher als Schalter, die verhindern, dass der detektierte Fehler sich fortpflanzen kann und somit möglicherweise größeren Schaden anrichtet. Allerdings sind die Stromkreisunterbrecher durch das eine Signal simultan zu schalten.

Es ist daher die Aufgabe der Erfindung ein Verfahren und eine Vorrichtung zur Überwachung bzw. Abschaltung der Energieversorgung eines Verbrauchers bereitzustellen, wobei die Funktion der Überwachungsvorrichtung bezüglich der Erkennung eines fehlerhaften Stromes und/oder einer fehlerhaften Spannung stets sicher gewährleistet sein soll.

Die das Verfahren betreffende Aufgabe wird dadurch gelöst, dass die Überprüfung der Funktionstüchtigkeit der Unterbrechungsmittel während des Betriebes des Verbrauchers erfolgt. Damit kann eine fehlerbehaftete Überwachung der Energieversorgung des Verbrauchers auch während des Betriebes sicher erkannt und ein Defekt eines Unterbrechungsmittels (Schalter/Schütze/Leistungshalbleiter) frühzeitig signalisiert werden.

Erfolgt die Überprüfung der Unterbrechungsmittel periodisch und dauerhaft, vorzugsweise während der gesamten Betriebsdauer des Verbrauchers, so ist eine permanente Überwachung gewährleistet, was die Sicherheit weiter erhöht. Theoretisch wäre es auch denkbar die Überwachung so auszugestalten, dass bei verminderter Sicherheit die Kontrolle der Schaltmittel nur von Zeit zu Zeit erfolgt.

Bevorzugt werden die Unterbrechungsmittel nach Maßgabe einer Rangfolge überprüft, so dass bei Erkennen eines fehlerhaften Unterbrechungsmittels aufgrund der Rangfolge eine einfache und sofortige Zuordnung möglich ist.

Ganz besonders bevorzugt erfolgt bei fehlender Funktionstüchtigkeit eines Unterbrechungsmittels eine Fehlerindikation und/oder es wird ein sicherer Zustand herbeigeführt. Die Fehlerindikation alarmiert den Bediener frühzeitig, so dass Gegenmaßnahmen bzw. Reparaturen eingeleitet werden können. Das Erreichen eines sicheren Zustandes wird durch die Wegnahme des Verbrauchers vom Netz bewirkt, so dass auf alle Fälle vermieden wird, dass eine Überspannung zum Verbraucher gelangt, oder eine Überstromsituation bestehen bleibt. Selbstverständlich ist auch die Kombination beider Maßnahmen möglich, so dass bei der Abschaltung des Verbrauchers zusätzlich eine Fehlerindikation erfolgt. Der sichere Zustand ist stets so auszulegen, dass dem Verbraucher kein Schaden zugeführt wird.

Vorteilhafterweise wird der Überwachungsvorgang ebenfalls überwacht, beispielsweise mittels eines Hardware- oder Software-Watchdogs, so dass auch ein Ausfall der Überwachung ― aus welchen Gründen auch immer ― sicher erkannt werden kann. Dies bewirkt eine zusätzliche Steigerung der Betriebssicherheit.

Die die Vorrichtung betreffende Aufgabe wird dadurch gelöst, dass zwei Unterbrechungsmittel parallel geschaltet sind und jedes Unterbrechungsmittel von einem Vergleichsmittel angesteuert wird, wobei Steuermittel vorgesehen sind, um die Unterbrechungsmittel manuell anzusteuern und eine Statusmeldung vorgesehen ist, um den Zustand der Unterbrechungsmittel zu erfassen.

Die parallele Anordnung von Schaltern oder sonstigen Mitteln zur Unterbrechung eines elektrischen Kontaktes, wozu prinzipiell auch Halbleiter wie Transistoren oder Relais zählen, bewirkt, dass ein redundanter Pfad zur Versorgung des Verbrauchers entsteht. Die Vergleichsmittel, zum Beispiel als Komparatoren beschaltete Operationsverstärker, ermöglichen den Vergleich der zu überwachenden Größe (Strom/Spannung) mit Hilfe einer Referenzgröße, also beispielsweise einer Referenzspannung oder eines Referenzstromes. Je nach Ergebnis des Vergleichs kann über das Ausgangssignal des Vergleichsmittels eine Aktion gestartet werden. Im Sinne der Erfindung würde man bei überhöhter Versorgungsspannung alle Unterbrechungsmittel aktivieren bzw. alle Schalter öffnen, so dass der Verbraucher sofort vom Netz getrennt wird. Die manuelle Ansteuermöglichkeit bewirkt, dass ein Unterbrechungsmittel auch ohne tatsächlich vorhandene Störung betätigt werden kann. Unter manuell soll hier nicht etwa nur ein Handbetrieb verstanden werden - welcher theoretisch zwar möglich wäre, aber praktisch kaum in Frage kommt - vielmehr ist hierunter die autarke Ansteuermöglichkeit der Unterbrechungsmittel unabhängig von einer zu überwachenden Größe gemeint. Diese Ansteuermöglichkeit in Verbindung mit der parallelen und redundanten Leitungsführung ermöglicht einen Test der Unterbrechungsmittel während des Betriebes des Verbrauchers, indem abwechselnd immer nur ein Unterbrechungsmittel eines Zweiges betätigt wird, so dass die Versorgung des Verbrauchers über den parallelen zweiten Zweig stets sichergestellt ist. Mittels der Statusmeldung in Form eines elektrischen analogen oder digitalen Abgriffes oder einer akustischen oder optischen Anzeige kann überprüft werden, ob das Unterbrechungsmittel korrekt arbeitet. Zusätzlich bewirkt die Erfindung, dass die Vergleichsmittel automatisch mitgetestet werden.

Vorteilhafterweise ist für jedes Vergleichsmittel eine unabhängige Referenzspannung vorgesehen, somit ist gewährleistet, dass bei Ausfall einer Referenzspannung und damit eines Zweiges noch der zweite Zweig verwendbar ist, um zum Beispiel ein nicht mehr ansteuerbares Unterbrechungsmittel zu überbrücken.

Besonders empfohlen wird, dass jeder Zweig der oben genannten Parallelschaltung eine Serienschaltung von einem ersten Unterbrechungsmittel mit einem ersten Vergleichsmittel und einem zweiten Unterbrechungsmittel mit einem, zweiten Vergleichsmittel umfasst. Sollte ein Unterbrechungsmittel innerhalb eines Zweiges ausfallen und nicht mehr in der Lage sein den Verbraucher vom Netz zu nehmen, so kann dies aufgrund der Serienschaltung noch mittels des zweiten Unterbrechungsmittels gewährleistet werden.

Empfehlenswert ist weiterhin, dass das erste Unterbrechungsmittel seinen Zustand nach Maßgabe einer Hysterese abhängig von dem Verlauf der Versorgungsspannung ändert, wobei das zweite Unterbrechungsmittel den letzten Schaltzustand unabhängig vom Verlauf der Versorgungsspannung hält. Die Hysterese kann beispielsweise mittels eines Schmitt-Triggers und die Beibehaltung des letzten Schaltzustandes mittels einer Selbsthalteschaltung realisiert werden. Die Hysterese deckt dabei einen bestimmten Toleranzbereich ab, in dem sich die zu überwachende Größe bewegen darf, ohne eine Abschaltung des Verbrauchers zu bewirken. Die Selbsthalteschaltung vermeidet, dass ein einmal abgeschalteter Verbraucher erneut automatisch wieder ans Netz genommen wird, bevor eine Fehlerbehebung erfolgt ist. Die Selbsthalteschaltung verhindert außerdem ein Schwingen der Versorgungsspannung zwischen der unteren und oberen Schaltschwelle des Schmitt-Triggers.

Es ist weiterhin vorteilhaft, wenn zwei oder auch mehrere unterschiedliche Versorgungsspannungen überwacht werden, indem jedes Vergleichsmittel wiederum zwei bzw. mehrere Vergleicher umfasst, wobei die Vergleicher parallel geschaltet sind und eine gemeinsame - oder auch unterschiedliche oder mehrere gleiche - Referenzspannungen nutzen und jeder Vergleicher einen eigenen Steuereingang umfasst, so dass das korrespondierende Umschaltmittel entweder mittels des ersten oder des zweiten bzw. N-ten Vergleichers manuell ansteuerbar ist. Somit kann eine zentrale Energieversorgung, welche die Versorgungsspannung zur Erzeugung verschiedener weiterer zu überwachender Spannungen liefert, bereits auch dann abgeschaltet werden, wenn eine der beiden Versorgungsspannungen ihre zulässigen Toleranzen über- oder unterschreitet. Soll der letztgenannte Fall ebenfalls abgedeckt werden, so ist die einfache Komparatorschaltung mittels einer Fensterkomparatorschaltung zu ersetzen.

Des weiteren muss eine entsprechende Erweiterung der Steuereingänge vorgesehen werden, sowie eine spezielle Anlaufschaltung, die beim Einschalten diese Logik für eine bestimmte Zeit außer Kraft setzt. Begründung: Die Unterspannungsabschaltung muss beim Einschalten kurzzeitig außer Funktion gesetzt werden, um ein Anlaufen überhaupt zu ermöglichen.

Bevorzugt ist eine Steuerlogik zur Ansteuerung der Steuereingänge vorgesehen , wobei diese Steuerlogik vorzugsweise programmierbar ist. Die Steuerlogik kann mittels einer programmierbaren Hardware (EPLD, FPGA, etc.) oder mittels eines Mikroprozessors realisiert werden. Der Mikroprozessor hat den Vorteil, dass das Steuerprogramm einfach abgeändert werden kann, während Änderungen bei einer programmierbaren Hardware mit größerem Aufwand einhergehen. Wenn die Steuerlogik zusätzlich den Zustand der Unterbrechungsmittel mittels der Statutsausgänge erfasst, kann diese das Testergebnis gleichzeitig auswerten und den Ablauf des Tests abhängig vom Ergebnis dieser Auswertung beeinflussen.

Besonders vorteilhaft ist es, wenn die Referenzspannung und die Eingangsspannung oder auch weitere denkbare Spannungen der Vergleichsmittel digitalisiert und zusätzlich überwacht werden. Die Überwachung könnte beispielsweise mittels eines Computerprogramms erfolgen. Es wird damit eine zusätzliche Kontrollmöglichkeit der Referenzspannungen und der Eingangsspannungen gewährleistet, um einen fehlerhaften Vergleich durch falsche Spannungswerte - hervorgerufen durch z.B. Bauteildrift, Leiterbahnunterbrechungen, Alterung, Temperaturdrift etc. - frühzeitig zu erkennen.

Ganz empfehlenswert ist es, die Versorgungsspannung des Sicherheitsteiles einer Sicherheitssteuerung mittels einer erfindungsgemäßen Lösung zu überwachen. Bei Sicherheitssteuerungen gelten sehr strenge Maßstäbe und hohe Anforderungen bezüglich der Betriebssicherheit. Die Erfindung leistet einen Beitrag zur Erfüllung dieser Anforderungen.

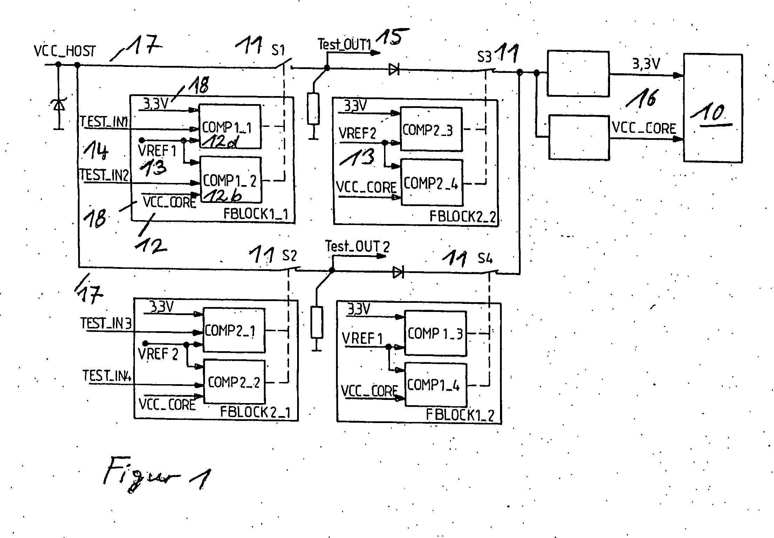

Die Erfindung wird im' Folgenden anhand des in der Figur 1 dargestellten Schaltungsbeispiels schematisch erläutert. In Figur 1 sind nur die für die Erfindung relevanten Komponenten gezeigt. Es versteht sich von selbst, dass die verwendeten elektronischen Bauteile noch gemäß ihrer Datenblätter zu beschalten und mit entsprechenden Versorgungsspannungen zu betreiben sind.

Figur 1 zeigt eine zweikanalige Überwachung für zwei aus einer gemeinsamen Versorgungsspannung VCC_HOST erzeugte Betriebsspannungen 16 für einen Verbraucher 10, wobei die Schalter 11 zur Unterbrechung der Versorgungsspannung VCC_HOST online überwacht werden. Online bedeutet in diesem Zusammenhang, dass die Überwachung erfolgt, während der Verbraucher 10 am Netz angeschlossen und betriebsbereit bleibt. Dies ist ein Unterschied zum Stand der Technik, wo die Funktion der Überspannungsabschaltung nicht überprüfbar ist. Im Detail sind gezeigt: Vergleichsmittel 12, welche Vergleicher 12a,b in Form von Komparatoren umfassen, Referenzspannungen 13, Steuereingänge 14, Statusausgänge 15, zwei parallele Zweige 17 und die Eingangsspannungen 18 der Komparatoren.

Jeder Zweig 17 der Parallelschaltung umfasst eine Serienschaltung von einem ersten Unterbrechungsmittel 11 mit einem ersten Vergleichsmittel 12 (FBLOCK1_1 bzw. FBLOCK2_1) und einem zweiten Unterbrechungsmittel 11 mit einem zweiten Vergleichsmittel 12 (FBLOCK1_2 bzw. FBLOCK2_2). Das erste Unterbrechungsmittel 11 bzw. Vergleichsmittel 12 ändert seinen Zustand nach Maßgabe einer Hysterese abhängig von dem Verlauf der Betriebsspannungen 16, wobei das zweite Unterbrechungsmittel 11 bzw. Vergleichsmittel 12 den letzten Schaltzustand unabhängig vom Verlauf der Betriebsspannungen 16 hält. Hierzu sind die Komparatoren 12a,b des ersten Vergleichsmittels 12 als Schmitt-Trigger beschaltet und die Komparatoren 12a,b des zweiten Vergleichsmittels 12 mit einer Selbsthalteschaltung beschaltet.

Indem jedes Vergleichsmittel 12 zwei parallel geschaltete Komparatoren 12a, b umfasst, welche eine gemeinsame Referenzspannung 13 nutzen und jeder Vergleicher 12a, b einen eigenen Steuereingang 14 umfasst, kann das korrespondierende Umschaltmittel 11 entweder mittels des ersten 12a oder des zweiten Vergleichers 12b manuell angesteuert werden. Zusätzlich können auf diese Weise die zwei voneinander unabhängig erzeugten Betriebsspannungen 16 überwacht werden. Normalerweise wird man eine Steuerlogik zur Ansteuerung der Steuereingänge 14 vorsehen, wobei diese Steuerlogik vorzugsweise programmierbar ist. Diese Steuerlogik ist hier jedoch nicht gezeigt. Die Steuerlogik kann den Zustand der Unterbrechungsmittel 11 mittels der Statutsausgänge 15 erfassen. Es gibt hier zwei mögliche Zustände. Den Zustand "High" bei geschlossenen Schaltern 11 oder den Zustand "Low" bei offenen Schaltern 11. Der Low-Zustand kann beispielsweise mittels Widerstandsklemmung auf Erdpotential erreicht werden, während der High-Zustand dem Spannungspegel von VCC_HOST entspricht.

Es bietet sich zusätzlich an die Referenzspannungen 13 und die Eirigangsspannungen 18 mittels eines AD-Wandlers zu digitalisieren und von einer Software überwachen zu lassen. Auch das ist in Figur 1 aus Gründen der Übersichtlichkeit nicht gezeigt.

Die beiden voneinander unabhängigen Referenzspannungen 13 (VREF1 und VREF2) werden derart von den Vergleichern verwendet, dass bei Ausfall einer der beiden Referenzspannungen stets noch ein sicheres Abschalten des Verbrauchers gewährleistet ist. Aus diesem Grunde wird im ersten Zweig in FBLOCK1_1 die Referenzspannung VREF1 und in FBLOCK2_2 die Referenzspannung VREF2 verwendet. Ähnlich verhält es sich im zweiten Zweig. Nur dass hier in FBLOCK2_1 die Referenzspannung VREF2 und in FBLOCK1_2 die Referenzspannung VREF1 verwendet wird. Sollte nun VREF1 ausfallen, so könnten noch die Schalter S3 oder S2 ansprechen und den Verbraucher 10 vom Netz 16 nehmen. Sofern VREF2 ausfällt stehen noch S1 und S4 zur Verfügung. Dies stellt eine weitere wichtige Maßnahme dar, durch welche ein sicheres Abschalten gewährleistet wird.

Ein automatischer Testablauf entsprechend des erfindungsgemäßen Verfahrens (z.B. durch die mittels eines EPLD's implementierte Steuerlogik) steuert in einem ersten Testzyklus zunächst alle Steuereingänge 14 (TEST_IN1-4) inaktiv und überprüft dabei die Statusausgänge 15 (Test_OUT1-2) auf High-Potential. Sofern dies erfüllt ist, ist das ein Zeichen dafür, dass die Schalter S1/S2 geschlossen sind. Im zweiten Testzyklus werden die Steuereingänge 14 (TEST_IN1-4) der Reihe nach aktiviert, wobei immer nur ein Steuereingang aktiv ist, während der andere Steuereingang inaktiv ist. Dabei wird der zugehörige Statusausgang Test_OUT1-2 auf Low-Potentioal überprüft. Low-Potential ist immer dann gegeben, wenn einer der Schalter S1 oder S2 geöffnet hat, was einen fehlerfreien Zustand der' Unterbrechungsmittel kennzeichnet. Sollte kein fehlerfreier Zustand erkannt werden, so muss eine Fehlerindikation erfolgen und/oder ein sicherer Zustand angefahren werden, z.B. Öffnen eines zu einem defekten Schalter 11 in Reihe geschalteten Schalters 11.

In diesem Anwendungsbeispiel werden nur die Schalter S1/S2 auf Funktion geprüft, da es im Prinzip zur Herstellung eines sicheren Zustandes ausreichend ist, wenn die Schalter S1 und S2 sicher funktionieren. Selbstverständlich könnte man die den Schaltern S3 und S4 zugeordneten Komparatoren 12a,b ebenfalls mit Testeingängen versehen und die Schaltung derart erweitern, dass auch die Funktion von S3/S4 sicher überprüfbar wird.

Der geschilderte Selbsttest ist im Prinzip ein Prozess, welcher solange autark läuft, wie der Verbraucher am Netz betrieben wird. Der Prozess könnte auch dann noch laufen, wenn kein Verbraucher mehr am Netz hängt, um vor Anschalten eines Verbrauchers sicherzustellen, dass keine Fehlfunktion vorherrscht. Um zusätzlich den reibungslosen Betrieb des Überwachungsprozesses an sich zu gewährleisten wird empfohlen, eine Watchdog - Funktion zu implementieren, welche die Funktionssicherheit der Gesamtanordnung weiter erhöht.

In diesem Beispiel handelt es sich bei dem Verbraucher 10 um das Sicherheitsteil einer Sicherheitssteuerung.

### Bezugszeichenliste

- 10: Verbraucher
- 11: Unterbrechungsmittel S1-S4
- 12: Vergleichsmittel mit Vergleicher 12a, b
- 13: Referenzspannung VREF1und VREF2
- 14: Steuermittel TEST_IN1-4
- 15: Statusausgänge TEST_OUT1-2
- 16: Betriebsspannung
- 17: Schaltungszweig
- 18: Eingangsspannung

## Patentansprüche

1. Verfahren zur Überwachung der Energieversorgung (16) eines Verbrauchers (10)
- mittels eines ersten Unterbrechungsmittels (11) zur Unterbrechung der Verbindung zum Verbraucher (10), wobei die Überprüfung der Funktionstüchtigkeit des ersten Unterbrechungsmittels (11) während des Betriebes des Verbrauchers (10) erfolgt, wobei eine zu überwachende Grösse, wie Strom oder Spannung, mit Hilfe einer Referenzgrösse durch erste Vergleichsmittel (12) verglichen wird und das erste Unterbrechungsmittel aktiviert wird, wenn die zu überwachende Grösse die Referenzgrösse überschreitet,
- mittels eines zweiten Unterbrechungsmittels (11) zur Unterbrechung der Verbindung zum Verbraucher (10), wobei die Überprüfung der Funktionstüchtigkeit des zweiten Unterbrechungsmittels (11) während des Betriebes des Verbrauchers (10) erfolgt,
wobei die Unterbrechungsmittel (11) parallel geschaltet sind und unabhängig von der zu überwachenden Grösse autark angesteuert werden, wobei abwechselnd immer nur ein Unterbrechungsmittel (11) der Parallelschaltung angesteuert wird, so dass die Versorgung des Verbrauchers (10) über das parallelgeschaltete Unterbrechungsmittel stets sichergestellt ist,
**dadurch gekennzeichnet,**
**dass** das zweite Unterbrechungsmittel derart ausgebildet ist, dass eine zu überwachende Grösse, wie Strom oder Spannung, mit Hilfe einer Referenzgrösse (13) durch zweite Vergleichsmittel (12) verglichen wird und das zweite Unterbrechungsmittel (11) aktiviert wird, wenn die zu überwachende Grösse die Referenzgrösse überschreitet, und
**dass** die Unterbrechungsmittel mittels dem jeweils zugeordneten Vergleichsmittel (12) unabhängig von der zu überwachenden Grösse autark angesteuert werden.

2. Verfahren nach Anspruch 1, **dadurch gekennzeichnet, dass** die Überprüfung periodisch und dauerhaft, vorzugsweise während der gesamten Betriebsdauer des Verbrauchers (10), erfolgt.

3. Verfahren nach einem der Ansprüche 1 bis 2, **dadurch gekennzeichnet, dass** die Unterbrechungsmittel (11) nach Massgabe einer Rangfolge überprüft werden.

4. Verfahren nach einem der Ansprüche 1 bis 3, **dadurch gekennzeichnet, dass** bei fehlender Funktionstüchtigkeit eines Unterbrechungsmittels (11) eine Fehlerindikation erfolgt und/oder ein sicherer Zustand herbeigeführt wird.

5. Verfahren nach einem der Ansprüche 1 bis 4, **dadurch gekennzeichnet, dass** die Aktivität der Überwachung ebenfalls überwacht wird.

6. Vorrichtung zur Überwachung der Energieversorgung (16) eines Verbrauchers (10)
- mittels eines ersten Unterbrechungsmittels (11, S1, S3) zur Unterbrechung der Verbindung zum Verbraucher (10), derart ausgebildet, dass eine Überprüfung der Funktionstüchtigkeit des ersten Unterbrechungsmittels (11) während des Betriebes des Verbrauchers (10) durchführbar ist, wobei eine zu überwachende Grösse, wie Strom oder Spannung, mit Hilfe einer Referenzgrösse (13) durch erste Vergleichsmittel (12, FBLOCK1_1, FBLOCK2_2) vergleichbar ist und das erste Unterbrechungsmittel aktivierbar ist, wenn die zu überwachende Grösse die Referenzgrösse überschreitet, und
- mittels eines zweiten Unterbrechungsmittels (11, S2, S4) zur Unterbrechung der Verbindung zum Verbraucher (10), derart ausgebildet, dass eine Überprüfung der Funktionstüchtigkeit des zweiten Unterbrechungsmittels (11) während des Betriebes des Verbrauchers (10) durchführbar ist,
wobei die Unterbrechungsmittel (11; S1, S3 bzw. S2, S4) parallel geschaltet sind und unabhängig von der zu überwachenden Grösse autark ansteuerbar sind, wobei abwechselnd immer nur ein Unterbrechungsmittel (11) der Parallelschaltung ansteuerbar ist, so dass die Versorgung des Verbrauchers (10) über das parallelgeschaltete Unterbrechungsmittels stets sichergestellt ist,
**dadurch gekennzeichnet, dass** das zweite Unterbrechungsmittel derart ausgebildet ist, dass eine zu überwachende Grösse, wie Strom oder Spannung, mit Hilfe einer Referenzgrösse (13) durch zweite Vergleichsmittel (12, FBLOCK2_1, FBLOCK1_2) vergleichbar ist und das zweite Unterbrechungsmittel (11) aktivierbar ist, wenn die zu überwachende Grösse die Referenzgrösse überschreitet, und
dass die Unterbrechungsmittel (11) mittels dem jeweils zugeordneten Vergleichsmittel (12) unabhängig von der zu überwachenden Grösse autark ansteuerbar sind.

7. Spannungsüberwachung nach Anspruch 6, **dadurch gekennzeichnet, dass** für jedes Vergleichsmittel (12) eine unabhängige Referenzspannung (13) vorgesehen ist.

8. Spannungsüberwachung nach einem der Ansprüche 6 bis 7, **dadurch gekennzeichnet, dass** jeder Zweig (17) der Parallelschaltung eine Serienschaltung von einem ersten Unterbrechungsmittel (11) mit einem ersten Vergleichsmittel (12) und einem zweiten Unterbrechungsmittel (11) mit einem zweiten Vergleichsmittel (12) umfasst.

9. Spannungsüberwachung nach Anspruch 8, **dadurch gekennzeichnet, dass** das erste Unterbrechungsmittel (11) seinen Zustand nach Massgabe einer Hysterese abhängig von dem Verlauf der Versorgungsspannung ändert, wobei das zweite Unterbrechungsmittel (11) den letzten Schaltzustand unabhängig vom Verlauf der Versorgungsspannung hält.

10. Spannungsüberwachung nach einem der Ansprüche 6 bis 9, **dadurch gekennzeichnet, dass** eine Anzahl N unterschiedlicher Versorgungsspannungen überwacht werden, indem jedes Vergleichsmittel (12) N Vergleicher (12a,b) umfasst, wobei diese parallel geschaltet sind eine Referenzspannung (13) nutzen und jeder Vergleicher (12a, b) einen eigenen Steuereingang (14) umfasst, so dass das korrespondierende Umschaltmittel (11) mittels wenigstens eines Vergleichers (12a,b) manuell ansteuerbar ist.

11. Spannungsüberwachung nach einem der Ansprüche 6 bis 10, **dadurch gekennzeichnet, dass** eine Steuerlogik zur Ansteuerung der Steuereingänge (14) vorgesehen ist, wobei diese Steuerlogik vorzugsweise programmierbar ist.

12. Spannungsüberwachung nach einem der Ansprüche 6 bis 11, **dadurch gekennzeichnet, dass** die Steuerlogik den Zustand der Unterbrechungsmittel (11) mittels der Statutsausgänge (15) erfasst.

13. Spannungsüberwachung nach einem der Ansprüche 6 bis 12, **dadurch gekennzeichnet, dass** die Referenzspannung (13) und die Eingangsspannung (17) der Vergleichsmittel (12) zusätzlich überwacht wird.

14. Spannungsüberwachung nach einem der Ansprüche 6 bis 13, **dadurch gekennzeichnet, dass** die Versorgungsspannung (16) das Sicherheitsteil (10) einer Sicherheitssteuerung überwacht.

## Claims

1. Method for monitoring the supply of power (16) to a load (10)
- using a first interruption means (11) for interrupting the connection to the load (10), wherein the serviceability of the first interruption means (11) is checked during the operation of the load (10), wherein a variable to be monitored, such as current or voltage, is compared using a reference variable by first comparison means (12), and the first interruption means is activated when the variable to be monitored exceeds the reference variable,
- using a second interruption means (11) for interrupting the connection to the load (10), wherein the serviceability of the second interruption means (11) is checked during the operation of the load (10), wherein the interruption means (11) are connected in parallel and are actuated autonomously independently of the variable to be monitored, wherein only ever one interruption means (11) from the parallel circuit is actuated alternately, as a result of which the supply of power to the load (10) via the parallel-connected interruption means is always ensured,
**characterized**
**in that** the second interruption means is designed such that a variable to be monitored, such as current or voltage, is compared using a reference variable (13) by second comparison means (12), and the second interruption means (11) is activated when the variable to be monitored exceeds the reference variable, and
**in that** the interruption means are actuated autonomously using the respectively associated comparison means (12) independently of the variable to be monitored.

2. Method according to Claim 1, **characterized in that** the check takes place periodically and persistently, preferably over the entire operating period of the load (10).

3. Method according to either of Claims 1 and 2, **characterized in that** the interruption means (11) are checked in accordance with an order of rank.

4. Method according to one of Claims 1 to 3, **characterized in that** if an interruption means (11) lacks serviceability then an error indication is provided and/or a safe state is brought about.

5. Method according to one of Claims 1 to 4, **characterized in that** the activity of the monitoring is likewise monitored.

6. Apparatus for monitoring the supply of power (16) to a load (10)
- using a first interruption means (11, S1, S3) for interrupting the connection to the load (10), designed such that a check on the serviceability of the first interruption means (11) can be performed during the operation of the load (10), wherein a variable to be monitored, such as current or voltage, can be compared using a reference variable (13) by first comparison means (12, FBLOCK1_1, FBLOCK2_2), and the first interruption means can be activated when the variable to be monitored exceeds the reference variable, and
- using a second interruption means (11, S2, S4) for interrupting the connection to the load (10), designed such that a check on the serviceability of the second interruption means (11) can be performed during the operation of the load (10),
wherein the interruption means (11; S1, S3 and S2, S4) are connected in parallel and can be actuated autonomously independently of the variable to be monitored, wherein only ever one interruption means (11) from the parallel circuit can be actuated alternately, as a result of which the supply of power to the load (10) via the parallel-connected interruption means is always ensured,
**characterized in that** the second interruption means is designed such that a variable to be monitored, such as current or voltage, can be compared using a reference variable (13) by second comparison means (12, FBLOCK2_1, FBLOCK1_2), and the second interruption means (11) can be activated when the variable to be monitored exceeds the reference variable, and
**in that** the interruption means (11) can be actuated autonomously using the respectively associated comparison means (12) independently of the variable to be monitored.

7. Power monitoring according to Claim 6, **characterized in that** an independent reference voltage (13) is provided for each comparison means (12).

8. Power monitoring according to either of Claims 6 and 7, **characterized in that** each path (17) of the parallel circuit comprises a series circuit containing a first interruption means (11) with a first comparison means (12) and a second interruption means (11) with a second comparison means (12).

9. Power monitoring according to Claim 8, **characterized in that** the first interruption means (11) changes its state in accordance with a hysteresis on the basis of the curve of the supply voltage, wherein the second interruption means (11) holds the last switching state independently of the curve of the supply voltage.

10. Power monitoring according to one of Claims 6 to 9, **characterized in that** a number N of different supply voltages are monitored by virtue of each comparison means (12) comprising N comparators (12a, b), wherein the latter are connected in parallel and use a reference voltage (13), and each comparator (12a, b) comprises a dedicated control input (14), as a result of which the corresponding changeover means (11) can be actuated manually using at least one comparator (12a, b).

11. Power monitoring according to one of Claims 6 to 10, **characterized in that** a control logic unit is provided for actuating the control inputs (14), said control logic unit preferably being programmable.

12. Power monitoring according to one of Claims 6 to 11, **characterized in that** the control logic unit detects the state of the interruption means (11) using the status outputs (15).

13. Power monitoring according to one of Claims 6 to 12, **characterized in that** the reference voltage (13) and the input voltage (17) of the comparison means (12) are additionally monitored.

14. Power monitoring according to one of Claims 6 to 13, **characterized in that** the supply voltage (16) monitors the safety portion (10) of a safety controller.

## Revendications

1. Procédé de surveillance de l'alimentation en énergie (16) d'un dispositif utilisateur (10)
- à l'aide d'un premier moyen d'interruption (11) destiné à interrompre la connexion au dispositif utilisateur (10), dans lequel la vérification de l'aptitude à fonctionner du premier moyen d'interruption (11) s'effectue pendant le fonctionnement du dispositif utilisateur (10), dans lequel une grandeur à surveiller, telle que le courant ou la tension, est comparée à l'aide d'une grandeur de référence par des premiers moyens de comparaison (12), et le premier moyen d'interruption est activé lorsque la grandeur à surveiller dépasse la grandeur de référence,
- à l'aide d'un second moyen d'interruption (11) destiné à interrompre la connexion au dispositif utilisateur (10), dans lequel la vérification de l'aptitude à fonctionner du second moyen d'interruption (11) s'effectue pendant le fonctionnement du dispositif utilisateur (10),
dans lequel les moyens d'interruption (11) sont connectés en parallèle et sont attaqués de manière autonome indépendamment de la grandeur à surveiller, dans lequel, alternativement, un seul moyen d'interruption (11) de la connexion en parallèle est toujours attaqué de telle sorte que l'alimentation du dispositif utilisateur (10) soit constamment assurée par l'intermédiaire du moyen d'interruption connecté en parallèle,
**caractérisé en ce que**
le second moyen d'interruption est configuré de telle sorte qu'une grandeur à surveiller, telle que le courant ou la tension, soit comparée à l'aide d'une grandeur de référence (13) par des seconds moyens de comparaison (12) et que le second moyen d'interruption soit activé (11) si la grandeur à surveiller dépasse la grandeur de référence, et **en ce que** les moyens d'interruption sont attaqués de manière autonome à l'aide des moyens de comparaison respectifs associés (12) indépendamment de la grandeur à surveiller.

2. Procédé selon la revendication 1, **caractérisé en ce que** la vérification s'effectue périodiquement et de manière permanente, de préférence pendant toute la période de fonctionnement du dispositif utilisateur (10).

3. Procédé selon l'une quelconque des revendications 1 à 2, **caractérisé en ce que** les moyens d'interruption (11) sont vérifiés conformément à un ordre de priorité.

4. Procédé selon l'une quelconque des revendications 1 à 3, **caractérisé en ce qu'**en l'absence d'aptitude au fonctionnement d'un moyen d'interruption (11) une indication d'erreur est fournie et/ou un basculement dans un état de sécurité est effectué.

5. Procédé selon l'une quelconque des revendications à 4, **caractérisé en ce que** l'activité de surveillance est également surveillée.

6. Dispositif destiné à surveiller l'alimentation en énergie (16) d'un dispositif utilisateur (10)
- à l'aide d'un premier moyen d'interruption (11, S1, S3) destiné à interrompre la connexion au dispositif utilisateur (10), configuré de telle sorte qu'une vérification du fonctionnement du premier moyen d'interruption (11) pendant le fonctionnement du dispositif utilisateur (10) puisse être effectuée, dans lequel une grandeur à surveiller, telle que le courant ou la tension, peut être comparée à l'aide d'une grandeur de référence (13) par des premiers moyens de comparaison (12, FBLOCK1_1, FBLOCK2_2) et le premier moyen d'interruption peut être activé si la grandeur à surveiller dépasse la grandeur de référence, et
- à l'aide d'un second moyen d'interruption (11, S2, S4) destiné à interrompre la connexion au dispositif utilisateur (10), configuré de telle sorte qu'une vérification du fonctionnement du second moyen d'interruption (11) pendant le fonctionnement du dispositif utilisateur (10) puisse être effectuée,
dans lequel les moyens d'interruption (11, S1, S3 ou S2, S4) sont connectés en parallèle et peuvent être attaqués de manière autonome indépendamment de la grandeur à surveiller, dans lequel, alternativement, un seul moyen d'interruption (11) de la connexion en parallèle peut être attaqué, de telle sorte que l'alimentation du dispositif utilisateur (10) soit constamment assurée par l'intermédiaire du moyen d'interruption connecté en parallèle,
**caractérisé en ce que** ledit second moyen d'interruption second est conçu de telle sorte qu'une grandeur à surveiller, telle que le courant ou la tension, puisse être comparée à l'aide d'une grandeur de référence (13) par des seconds moyens de comparaison (12, FBLOCK2_1, FBLOCK1_2) et que le second moyen d'interruption (11) soit activé si la grandeur à surveiller dépasse la grandeur de référence, et
**en ce que** les moyens d'interruption (11) peuvent être attaqués de manière autonome indépendamment de la grandeur à surveiller à l'aide des moyens de comparaison respectifs associés (12).

7. Dispositif de surveillance d'énergie selon la revendication 6, **caractérisé en ce que** pour chaque moyen de comparaison (12) il est prévu une tension de référence indépendante (13).

8. Dispositif de surveillance d'énergie selon l'une quelconque des revendications 6 à 7, **caractérisé en ce que** chaque branche (17) de la connexion en parallèle comprend une connexion en série d'un premier moyen d'interruption (11) à un premier moyen de comparaison (12) et d'un second moyen d'interruption (11) à un second moyen de comparaison (12).

9. Dispositif de surveillance d'énergie selon la revendication 8, **caractérisé en ce que** le premier moyen d'interruption (11) change d'état conformément à une fonction d'hystérésis du profil de la tension d'alimentation, dans lequel le second moyen d'interruption (11) reste dans le dernier état de commutation indépendamment du profil de la tension d'alimentation.

10. Dispositif de surveillance d'énergie selon l'une quelconque des revendications 6 à 9, **caractérisé en ce qu'**un nombre N de tensions d'alimentation différentes sont surveillées, chaque moyen comparateur (12) comprenant N comparateurs (12a,b), dans lequel ceux-ci sont connectés en parallèle et utilisent une tension de référence (13), et chaque comparateur (12a, b) comprend une entrée de commande séparée (14), de telle sorte que le moyen de commutation correspondant (11) puisse être attaqué manuellement au moyen d'au moins un comparateur (12a, b).

11. Dispositif de surveillance d'énergie selon l'une quelconque des revendications 6 à 10, **caractérisé en ce qu'**il est prévu une logique de commande destinée à attaquer les entrées de commande (14), dans lequel la logique de commande peut de préférence être programmable.

12. Dispositif de surveillance d'énergie selon l'une quelconque des revendications 6 à 11, **caractérisé en ce que** la logique de commande détecte l'état des moyens d'interruption (11) à l'aide de la sortie d'état (15).

13. Dispositif de surveillance d'énergie selon l'une quelconque des revendications 6 à 12, **caractérisé en ce que** la tension de référence (13) et la tension d'entrée (17) des moyens de comparaison (12) sont en outre surveillées.

14. Dispositif de surveillance d'énergie selon l'une quelconque des revendications 6 à 13, **caractérisé en ce que** la tension d'alimentation (16) surveille la partie de sécurité (10) d'un dispositif de commande de sécurité.
